# EUROPÄISCHE PATENTANMELDUNG

(11) **EP 0 643 080 A2**
(43) Veröffentlichungstag der Anmeldung: **15.03.1995**
(21) Anmeldenummer: 94113436.3
(22) Anmeldetag: 29.08.1994
(51) Int. Cl.: C08F 220/04, C08F 8/14, C08F 265/04, C09D 133/06

(54) **Polymermischungen mit Wasser**

(30) Priorität: 10.09.1993 DE 4330767
(71) Anmelder: HOECHST AKTIENGESELLSCHAFT, D-65926 Frankfurt am Main (DE)
(72) Erfinder: Giencke, Astrid, Dr., D-65719 Hofheim (DE); Ulrich, Petra, D-65205 Wiesbaden (DE); Walz, Gerd, Dr., D-65207 Wiesbaden (DE); Mergardt, Bernd, Dr., D-65347 Eltville (DE)

(57) **Zusammenfassung**

Emulgator-freie Kunstharze und Kunstharzmischungen mit Wasser als Bindemittel für Druckfarben und Drucklacke auf Wasserbasis, enthaltend
a) ein gegebenenfalls neutralisiertes oder teilneutralisiertes Säuregruppen-haltiges Polymerharz A, herstellbar durch in-situ Polymerisation von Säuregruppenhaltigen ethylenisch ungesättigten Verbindungen mit weiteren ethylenisch ungesättigten Verbindungen und Kondensation mit Monohydroxyverbindungen und gegebenenfalls Neutralisation oder Teilneutralisation, und
b) gegebenenfalls ein wasserunlösliches Polymerharz B in Form von Latexteilchen, herstellbar durch Emulsionspolmerisation von ethylenisch ungesättigten Verbindungen in Gegenwart des Polymerharzes A.

## Beschreibung

Die Erfindung betrifft Kunstharze und Dispersionen, die frei von niedermolekularen Emulgatoren sind, als Bindemittel in Wasserlacken für Druckverfahren, Verfahren zu ihrer Herstellung und ihre Verwendung.

Es ist allgemein bekannt, Copolymerisate aus Monomeren mit sauren Gruppen und weiteren Monomeren als Bindemittel für wäßrige Druckfarben und Drucklacke zu verwenden. Diese Harze werden in der Regel mit Basen ganz oder teilweise neutralisiert, um sie wasserlöslich oder wasserdispergierbar zu machen. In wäßriger Phase besitzen sie ein hohes Aufnahmevermögen für Pigmente und/oder Füllstoffe und sind auch als polymere Emulgatoren für Emulsionspolymerisationen zur Erzeugung von Dispersionen einsetzbar. Diese Harzlösungen und Dispersionen werden dann häufig nach Zugabe von wasserlöslichen organischen Lösungsmitteln, die als Verlauf- oder Verfilmungsmittel wirken, und gegebenfalls nach Pigmentierung mit den allgemein üblichen Druckverfahren auf Substrate, beispielsweise Papier, Holz, Metall, Folien und/oder andere Kunststoffe appliziert.

Aus EP-B 0 068 024 sind beispielsweise saure Kunstharze auf Basis von Styrol, α-Methylstyrol und Acrylsäure bekannt, die sich prinzipiell zur Herstellung von Wasserfarben und Dispersionen eignen. Ein Nachteil dieser handelsüblichen Produkte ist ihre unzureichende Emulgierleistung, die das Aufnahmevermögen für Pigmente und hydrophobe Polymere begrenzt.

Aus EP-A 0 047 889 sind Polymerdispersionen bekannt, in denen polare Kunstharze mit niedrigem Molekulargewicht und hoher Säurezahl relativ unpolare Styrol/Acrylat-Copolymere stabilisieren. Derartige Harze ergeben in Drucklacken und Druckfarben unzureichende rheologische Eigenschaften (Viskosität/Scherstabilität) und weisen aufgrund ihrer Polarität ein unzureichendes Pigmentdispergiervermögen und eine unzureichende Wasserfestigkeit auf.

US-A 4 151 143 beschreibt Emulgator-freie Acrylat-Dispersionen, die durch Pfropfung während der Emulsionspolymerisation von ungesättigten Monomeren auf Salze von sauren Kunstharzen erhalten werden. Da die eingesetzten sauren Kunstharze einen relativ geringen molaren Anteil an Carbonsäuregruppen-haltigen Monomeren aufweisen, können nur Dispersionen mit einem hohen Anteil an partiell wasserverdünnbaren Acrylaten und Hydroxyacrylaten erhalten werden, der zu einer Verminderung der Block- und Wasserfestigkeit der unter Einsatz derartiger Dispersionen hergestellten Wasserfarben führt.

US-A 4 465 803 schlägt die Herstellung wasserlöslicher Harze über Lösungspolymerisation und anschließende Verwendung dieser Harze zur Dispersionsherstellung über Emulsionspolymerisation vor. Bei der Bildung der Emulsionspolymerisate werden chemische Bindungen zwischen reaktiven Seitengruppen des Harzes und dem Emulsionspolymerisat aufgebaut, so daß diese Dispersionen faktisch keine Bi- oder Multimodalität mehr aufweisen und daher aufgrund mangelnder rheologischer Eigenschaften, beispielsweise geringer Scherstabilität, als Bindemittel zur Herstellung von Lacken und Farben für Druckverfahren nicht mehr geeignet sind.

Emulgator-freie Polymerdispersionen, die mittels Emulsionspolymerisation von ungesättigten unpolaren Monomeren in Gegenwart von hochpolaren Polyelektrolytpolymeren hergestellt werden, sind auch Gegenstand von EP-A 0 511 520. Diese Systeme sind jedoch für den Einsatz als Bindemittelgrundlage in wäßrigen Druckfarben hinsichtlich ihrer Emulgierkapazität in Emulsionspolymerisationen und hinsichtlich ihrer drucktechnischen Eigenschaften noch verbesserungsbedürftig (Vergleichsbeispiel), da die nicht ausreichende Emulgierleistung der Polyelektrolytpolymere einen Mindestanteil dieser polaren Polymere von 29 Gew.-% am Gesamtfestkörper erfordert und damit zu Nachteilen beispielsweise bei der Trocknung und bezüglich der Wasser- und Blockfestigkeit bei wäßrigen Systemen im Drucksektor führt.

Der vorliegenden Erfindung liegt die Aufgabe zugrunde, wäßrige Harzlösungen und Dispersionen bereitzustellen, die als Bindemittelbestandteile von hochwertigen Wasserfarben und Wasserlacken im Drucksektor einsetzbar sind und die die Nachteile des Standes der Technik nicht aufweisen.

Die Aufgabe wird erfindungsgemäß dadurch gelöst, daß ein spezielles Säuregruppen-haltiges Polymerharz A über in-situ Polymerisation und Kondensation in Gegenwart von Monohydroxyverbindungen erzeugt wird, das durch sofortigen Eintrag in mit Neutralisationsmittel versehenem Wasser eine viskose Harzlösung ergibt, in der durch Zusatz von unpolaren Monomeren ein Polymer B erzeugt werden kann, das in Form von Latexteilchen anfällt.

Die Erfindung betrifft Emulgator-freie Kunstharze und Kunstharzmischungen mit Wasser, enthaltend
a) ein gegebenenfalls neutralisiertes oder teilneutralisiertes Säuregruppen-haltiges Polymerharz A, herstellbar durch in-situ Polymerisation von Säuregruppenhaltigen ethylenisch ungesättigten Verbindungen mit weiteren ethylenisch ungesättigten Verbindungen und Kondensation mit Monohydroxyverbindungen und gegebenenfalls Neutralisation oder Teilneutralisation, und
b) gegebenenfalls ein wasserunlösliches Polymerharz B in Form von Latexteilchen, herstellbar durch Emulsionspolmerisation von ethylenisch ungesättigten Verbindungen in Gegenwart des Polymerharzes A.

Ein weiterer Gegenstand der Erfindung ist ein Verfahren zur Herstellung von Emulgator-freien Kunstharzen und Kunstharzmischungen mit Wasser nach Anspruch 1, dadurch gekennzeichnet, daß
a) ein Säuregruppen-haltiges Polymerharz A hergestellt wird durch in-situ Polymerisation von Säuregruppen-haltigen ethylenisch ungesättigten Verbindungen mit weiteren ethylenisch ungesättigten Verbindungen und Kondensation mit Monohydroxyverbindungen und gegebenenfalls anschließend neutralisiert oder teilneutralisiert wird und
b) gegebenenfalls ein wasserunlösliches Polymerharz B in Form von Latexteilchen hergestellt wird durch Emulsionspolymerisation von ethylenisch ungesättigten Verbindungen in Gegenwart des gegebenenfalls neutralisierten oder teilneutralisierten Polymerharzes A.

Gegenstand der vorliegenden Erfindung sind auch die Säuregruppen-haltigen Polymerharze A, herstellbar durch in-situ Polymerisation von ethylenisch ungesättigten Verbindungen und Kondensation mit Monohydroxyverbindungen, deren Salze sowie deren Lösungen in Wasser.

Die Polymere vom Typ A sind in zumindest teilneutralisiertem Zustand der Gruppe der Polymertenside zuzuordnen und weisen in Wasser besonders gut emulgierende Eigenschaften auf. Im Unterschied zu herkömmlichen niedermolekularen Tensiden bzw. Emulgatoren einerseits, sowie Schutzkolloiden andererseits werden die erfindungsgemäß verwendbaren Polymertenside häufig als Stabilisatoren bezeichnet. Die emulgierende Wirkung sowie das spezifische Lösungsverhalten der erfindungsgemäß verwendbaren Stabilisatoren wird dabei bestimmt einerseits von der Molekülgröße andererseits von der Molekülarchitektur, also von Menge und Verteilung geladener, polarer und unpolarer Anteile.

Wesentlich für die Eigenschaften der erfindungsgemäßen Polymerharze A sind die zahlenmäßigen Verhältnisse der Comonomereinheiten, der Anteil und der Typ der eingeesterten Monohydroxyverbindungen, die Säurezahl, das Molgewicht, die Glasübergangstemperatur und das Polymerisationsverfahren. Im Gegensatz zu den bislang bekannten Verfahren wird erfindungsgemäß vorzugsweise in einer Mischung aus Alkanolen und monoveretherten Polyalkylenoxidverbindungen und gegebenenfalls Cycloalkanolen oder Lactonen polymerisiert. Die Comonomeren und Monohydroxyverbindungen werden so bei Temperaturen von 180 bis 240 °C, vorzugsweise bei 190 bis 220 °C, umgesetzt und entstehendes Reaktionswasser sofort abgetrennt. Vorteilhaft wird bei konstanter Temperatur unter Normaldruck unter gleichzeitiger Abtrennung der Niedrigsieder, aber auch mit Überdruck bis 15 bar, vorzugsweise bis 5 bar, gearbeitet. Zur Vervollständigung der Veresterung wird das restliche Reaktionswasser gegen Ende der Reaktionen bevorzugt im Vakuum entfernt. Die Säurezahlen (mg KOH/g) der Produkte liegen im Bereich von 160 bis 290, vorzugsweise 195 bis 275. Der Anteil an erfindungsgemäß in Estergruppen gebundenen Hydroxyverbindungen beträgt zwischen 0,4 und 25, vorzugsweise zwischen 0,8 und 18 Gew.-%. Üblicherweise wird ein gewichtsmittleres Molekulargewicht von 300 bis 100.000, vorzugsweise 800 bis 40.000, insbesondere 1000 bis 25.000, angestrebt. Die Glasübergangstemperatur der Polymere liegt zwischen 55 und 160 °C, vorzugsweise 65 und 130 °C, insbesondere 75 und 125°C.

Zur Einführung von Carbonsäuregruppen in das Polymer vom Typ A sind ungesättigte Mono- oder Dicarbonsäuren oder deren Gemische einsetzbar. Als ungesättigte Monocarbonsäuren werden Acrylsäure, Methacrylsäure und/oder Crotonsäure, einzeln oder im Gemisch, verwendet. Dazu zählen auch Halbester von Malen- und Fumarsäure mit gesättigten Alkoholen, die 1 bis 10 Kohlenstoff-Atome enthalten. Als ungesättigte Dicarbonsäuren seien Dicarbonsäuren, die 4 bis 6 Kohlenstoff-Atome enthalten, genannt, beispielsweise Maleinsäure, Itaconsäure, Mesaconsäure, Fumarsäure, Methylenmalonsäure, Citraconsäure, deren Salze oder gegebenenfalls Anhydride.

Als Comonomere für die Carbonsäuregruppen-haltigen Monomere eignen sich prinzipiell alle radikalisch polymerisierbaren ethylenisch ungesättigten Verbindungen, bevorzugt werden hydrophobe Monomere, beispielsweise Vinylaromaten oder offenkettige konjugierte Diene eingesetzt. Beispielsweise seien genannt Styrol, Vinyltoluol, α-Methylstyrol, Ethylstyrol, iso-Propylstyrol, tert.-Butylstyrol, 2,4-Dimethylstyrol, Diethylsryrol, o-Methyl-p-iso-propylstyrol, Halogenstyrole wie Chlorstyrol, Fluorstyrol und Jodstyrol, 2,4-Cyanostyrol, Hydroxystyrol, Nitrostyrol, Aminostyrol und/oder Phenylstyrol. Bevorzugt sind insbesondere Styrol, Vinyltoluol und α-Methylstyrol. Als offenkettige Diene sind zu nennen 1 ,3-Butadien, 2-Methyl-1,3-butadien, 2,3-Dimethyl-1,3-butadien, Pentadien, 2-Neopenryl-1,3-butadien und substituierte 1,3-Butadiene, wie 2-Chlor-1,3-butadien, 2-Cyan-1,3-butadien, substituierte geradkettige konjugierte Pentadiene, geradkettige und verzweigte konjugierte Hexadiene, andere geradkettige oder verzweigte konjugierte Diene mit in der Regel 4 bis 9 Kohlenstoffatomen und deren Mischungen.

Zur Erzielung spezieller Eigenschaften können auch weitere Ausgangsmonomere beispielsweise Ester von Acryl-, Methacryl- und Crotonsäure mit gesättigten Alkoholen, die 1 bis 12 Kohlenstoffe am Alkoholrest enthalten, einzeln oder im Gemisch, verwendet werden. Beispielsweise seien genannt Methylmethacrylat, Ethylacrylat, Butylacrylat, 2-Ethylhexylacrylat.

Als weitere Comonomere können optional verwendet werden: Acrylamid, Methacrylamid, 2-Acrylamido-2-methylpropansulfonsäure, Acrylamidosulfonsäure, Vinylacetat, Vinylsulfonsäure, Allylsulfonsäure, Vinylphosphonsäure, Allylphosphonsäure, Acrylnitril, Methacrylnitril, Dimethylaminoethylacrylat, Diethylaminoethylacrylat, Diethylaminoethylmethacrylat, N-Vinylpyrrolidon, N-Vinylformamid, N-Vinylimidazol, N-Vinylimidazolin, 1-Vinyl-2-methyl-2-imidazolin und/oder deren Mischungen. Diejenigen Monomere dieser Gruppe, die Säuregruppen enthalten, können bei der Copolymerisation in Form der freien Säure oder auch in partiell oder vollständig mit Alkalimetallbasen oder Ammoniumbasen neutralisierter Form eingesetzt werden. Die basischen Acrylate, beispielsweise Diethylaminoethylacrylat, werden mit Säure neutralisiert bzw. quarternisiert und dann der Copolymerisation zugeführt. Außerdem können Vinylester von α,α-Dialkylalkanmonocarbonsäuren, beispielsweise Vinylester der Versaticsäure, aber auch Vinylacetat und Vinylpropionat verwendet werden. Diese modifizierenden Monomere dienen lediglich zur Erzielung spezieller Eigenschaften und sind zu 0 bis 10 Gew.-%, vorzugsweise 0 bis 4%, am Aufbau der Copolymerisate beteiligt.

Als Monohydroxyverbindungen werden erfindungsgemäß Monoalkohole und monoveretherte Polyalkylenoxidverbindungen verstanden. Der Einbau dieser Monohydroxyverbindungen in die erfindungsgemäßen Polymere A verbessert maßgeblich deren Dispersionsvermögen.

Als Monoalkohole sind solche mit Alkan- oder Cycloalkanresten, vorzugsweise (C₈ bis C₃₂)-Alkohole und deren Isomere, beispielsweise 2-Ethylhexanol, Octanol, Nonanol, Decanol, Dodecanol, ferner Stearyl-, Cetyl-, Ceryl-, Myricylalkohol, ®TCD-Alkohol M (Hoechst MG = 166, OH-Zahl 327), Wollwachsalkohole, Cholesterole, Borneole, Isoborneole und Tallölfettalkohole einsetzbar.

Optional können zur Modifizierung der Eigenschaften auch (C₁-C₆)-Alkohole mit Alkan- und Cycloalkanketten in Anteilen von 0 bis 35 Gew.-% bezogen auf den Anteil an Monohydroxyverbindungen eingesetzt werden, beispielsweise Butanol, Hexanol, Cyclohexanol und/oder deren Mischungen.

Als monoveretherte Polyalkylenoxidverbindungen werden Polyalkylenoxidverbindungen der allgemeinen Formel

R¹-(O-CHR²-CHR³)ₙ-OH

eingesetzt. In dieser Formel steht R¹ für einen Alkyl-, Cycloalkyl, oder Phenylrest, vorzugsweise für einen Alkylrest mit 1 bis 12, insbesondere 1 bis 4 Kohlenstoffatomen, R² und R³ stehen für Wasserstoff oder Alkylreste mit 1 bis 4 Kohlenstoffatomen und n bedeutet 1 bis 10, vorzugsweise 1 bis 4. Als Beispiele derartiger Verbindungen seien genannt: Methylglykol, Ethylglykol, Butylglykol, Methyldiglykol, Ethyldiglykol, Butyldiglykol, Methyltriglykol, Ethyltriglykol, Butyltriglykol, Methyltetraglykol, Ethyltetraglykol, Butyltetraglykol, ®Polyglykol-M-250 (Hoechst, MG = 260-275, OH-Zahl 204-215), ®Polyglykol-M-350 (Hoechst, MG = 335-265, OH-Zahl 154-167), Propylenglykolmethylether, Dipropylenglykolmethylether, Tripropylenglykolmethylether, Propylenglykol-n-butylether, Dipropylenglykol-n-butylether, Tripropylenglykol-n-butylether und Propylenglykolphenylether.

Zusätzlich können zu den Monohydroxyverbindungen optional auch cyclische Ester eingesetzt werden. Diese Ester enthalten bevorzugt vier oder mehr Kohlenstoffatome im Ring, wobei die Kohlenstoffatome des Rings anstelle von Wasserstoff auch andere Substituenten wie Alkyl, Cycloalkyl, Aryl, Aralkyl, Alkoxy enthalten können. Genannt seien Monoalkyl-substituierte ε-Caprolactone wie Monomethyl-, Monoethyl-, Monopropyl-, Monoisopropyl- Monoethylhexyl-, Monodecyl-, Monododecyl-ε-caprolacton; weiterhin Dialkyl-ε-caprolactone, bei denen sich die zwei Alkylgruppen an dem gleichen oder an zwei unterschiedlichen nicht aber beide am ε-C-Atom befinden; weiterhin Trialkyl-ε-caprolactone, in denen zwei oder drei C-Atome im Ring substituiert sind, so lange wie sich am ε-C-Atom nicht zwei Substituenten befinden; weiterhin Alkoxy-ε-caprolactone wie Methoxy- und Ethoxy-ε-caprolacton; weiterhin Cycloalkyl-, Aryl und Aralkyl-ε-caprolactone wie Cyclohexyl-, Phenyl- und Benzyl-ε-caprolacton. Bevorzugt ist das unsubstituierte ε-Caprolacton.

Andere cyclische Ester, die im Rahmen der Erfindung eingesetzt werden können und zumindest einen zur Ringöffnung befähigten inneren Ester enthalten, sind: γ-Butyrolacton, γ-Valerolacton, Ethylencarbonat, Tetramethylencarbonat, 2,2-Dimethyl-4-phenyl-1,3-dioxolan-5-on, α-n-Propyl-δ-valerolacton, δ-δ-Dimethyl-δ-valerolacton, 3-Ethyl-1,4-dioxan-2-on, 3,3,6-Trimethyl-1,4-dioxan-2-on, Tetramethylglykolid, Tetraphenylglykolid, 3-Oxa-ε-caprolacton, β-Propiolacton, α-α-Bis(chlormethyl)propiolacton, β-Butyrolacton, Pivalolacton (PVL), Thiobutyrolacton (TBL), δ-Valerolacton (DVL), α,β,γ-Trimethoxy-δ-valerolacton, 1,4-Dithian-2,5-dion, Trimethylencarbonat, Neopentylcarbonat, Ethylenoxolan, β-Methyl-ε-isopropyl-ε-caprolacton, Propyienoxolan, 4-Hydroxycyclohexancarbonsäurelacton, cis-Disalicylid und Trisalicyclid, sowie deren Mischungen. Bevorzugte Verbindungen sind γ-Butyrolacton, δ-Valerolacton, Pivalolacton, Thiobutyrolacton, β-Butyrolacton, ε-Caprolacton, sowie deren Mischungen.

Die Initiierung der Polymerisationen kann durch die dem Fachmann bekannten thermisch zerfallenden Radikalbildner aus der Reihe der Azoverbindungen, Peroxide, Persäureester oder Hydroperoxide erfolgen. Bevorzugt werden organische Peroxide eingesetzt, vorzugsweise Dialkylperoxide insbesondere Di-tert.-Butylperoxid.

Zur Steuerung der Copolymerisation kann optional unter Zusatz eines Lösungsmittels gearbeitet werden, das nach Beendigung der Reaktion im Vakuum entfernt wird. Die Menge des Lösungsmittels beträgt vorzugsweise bis zu 25 Gew.-%, insbesondere bis zu 10 Gew.-%, bezogen auf das Polymer A. Als Lösungsmittel ist bevorzugt 3-Ethoxyethylpropionat einzusetzen, das unter den Reaktionsbedingungen als verkapptes Ethylacrylat reagiert.

Die Copolymere A lassen sich nach zumindest teilweiser Neutralisation mit Basen, wie Ammoniak oder Aminen, vorzugsweise Tri-, Di- oder Monoalkylaminen beispielsweise Triethanolamin, Morpholin oder Alkanolaminen wie 2-Amino-1-methyl-1-propanol oder Alkali- oder Erdalkalihydroxiden oder deren Gemischen in Wasser auflösen und sind so sehr vorteilhaft als Bindemittel für wäßrige Druckfarben oder als Stabilisatoren für die Emulsionspolymerisation zu verwenden. Im allgemeinen ist es dabei ausreichend, eine Teilneutralisation von 50-90 % durchzuführen, bevorzugt ist aber eine Überschuß-Neutralisation auf einen pH-Wert von 7,5 bis 10, vorzugsweise 8 bis 9.

Zur Herstellung der Lösung des zumindest teilneutralisierten Harzes im Fabrikationsmaßstab hat sich die Inversverdünnung, also der direkte Eintrag der Harzschmelze des Copolymerisats vom Typ A in Wasser/Neutralisationsmittel bei einer Harztemperatur von 100 bis 250 °C, vorzugsweise 150 bis 220 °C und mindestens bei Normaldruck, als vorteilhaft erwiesen. Zweckmäßigerweise wird die wäßrige Mischung dann noch bei mindestens Normaldruck 30 min bis 3 Std. bei 80-95°C, vorzugsweise bei ca. 90°C gehalten. Optional kann besonders bei hochviskosen Schmelzen von Harzen mit hoher Glasübergangstemperatur mit niedermolekularen gesättigten aliphatischen Carbonsäuren und/oder mit Glykolethern versetzt werden, um eine deutliche Absenkung der Schmelzviskosität zu erzielen. Hier sind Anteile bis zu 20 Gew.-% Zuschlagstoffe bezogen auf den Harzanteil zweckmäßig. Als Carbonsäuren sind Ameisensäure, Milchsäure, Malonsäure, Bernsteinsäure, Weinsäure oder Citronensäure, vorzugsweise Essigsäure einsetzbar. Als Glykolether seien genannt Ether von Ethylenglykol, Propylenglykol, Butylenglykol, beispielsweise 2-n-Propoxyethanol, 2-(1-Methylethoxyethanol), 2-n-Butoxyethanol, 2-(2-Methoxyeth-oxy)ethanol, 2-(2-Ethoxyethoxy)ethanol, 2-(2-Butoxyethoxy)ethanol, Triethylenglykolmonomethylether, Tetraethylenglykolmonomethylether, 2,5,8,11-Tetraoxadodecan, 1-Methoxy-2-propanol, 1-Ethoxy-2-propanol, Tripropyleneglykolmonomethylether. Bevorzugt wird 2-(2-Ethoxyethoxy)ethanol und/oder 1-Methoxy-2-propanol verwendet. Üblicherweise wird jedoch die Inversverdünnung vollkommen ohne Zusatz von Lösungsmitteln durchgeführt.

Erfindungsgemäß enthalten die Kunstharzmischungen neben den Polymerharzen A optional auch Polymerharze B. Die Herstellung der Polymerharze B erfolgt über Emulsionspolymerisation in Gegenwart von zumindest teilneutralisiertem Polymerharz A. Die Stabilisator-Polymere A sollen in einer Menge vorhanden sein, die ausreichend ist, die erwünschten Emulgiereffekte herbeizuführen. Andererseits sollte sowohl aus wirtschaftlichen Gründen als auch aus Gründen der Beeinflussung der anwendungstechnischen Eigenschaften der herzustellenden Emulsionspolymerisate der Anteil der Stabilisatoren A nicht zu hoch sein. Es wird deshalb ein Gehalt an Stabilisatoren A von 4 bis 56 Gew.-%, insbesondere 10 bis 50 Gew.-%, bezogen auf die Menge der Polymere A und B, bevorzugt eingesetzt. Sehr gute Ergebnisse werden erzielt, wenn vorzugsweise 12 bis 42 Gew.-% Stabilisatoren A bezogen auf die Summe von A und B, eingesetzt werden.

Verfahren zur Emulsionspolymerisation sind dem Fachmann bekannt. Üblicherweise zeichnen sie sich dadurch aus, daß in wäßriger Phase in Gegenwart von Radikalstartern und Emulgatoren, Schutzkolloiden oder anderen Stabilisatoren eine radikalische Polymerisation von ethylenisch ungesättigten Monomeren durchgeführt wird. Die genannten Komponenten können auf verschiedene Weise in die Emulsionspolymerisation eingebracht werden. Bei Verwendung der erfindungsgemäßen Polymerharze A in Emulsionspolymerisationen als Stabilisatoren kann aufgrund der guten Emulgierleistung dieser Polymeren auf die Gegenwart von niedermolekularen Tensiden und auf Schutzkolloide verzichtet werden. Die wäßrige Phase wird üblicherweise zum größten Teil vorgelegt, wobei eine anteilige Zugabe von Wasser während der Reaktion in Form einer Radikalstarterlösung oder Monomerpreemulsion möglich ist. Stabilisatoren können vollständig oder teilweise vorgelegt und der Rest während der Polymerisation zudosiert werden. Die Monomere können vollständig vorgelegt werden oder in reiner Form oder als Preemulsion in Wasser zudosiert werden. Der Radikalstarter wird meistens teilweise vorgelegt und teilweise als wäßrige Lösung zudosiert. Als Vorlage wird die Mischung bezeichnet, die vor Einstellung der Reaktionstemperatur von üblicherweise 20 bis 99 °C in den Reaktor eingebracht wird. Die Polymerisation wird meistens durch thermische Zersetzung der Radikalstarter oder durch Redoxsysteme eingeleitet und kann als beendet angesehen werden, wenn der größte Teil der durch radikalische Kettenreaktion umsetzbaren Monomeren abreagiert ist. Üblicherweise bleiben bei diesem Verfahren zirka 0,001 bis 0,1 Gew.-% Restmonomere zurück. Weitere Verfahren bzw. Verfahrensvarianten werden beispielsweise in Ullmann, Enzyklopädie der technischen Chemie, 4. Auflage, Verlag Chemie, Weinheim (1980), Band 19, Seiten 132 ff. sowie in Encyclopedia of Polymer Science and Engineering, Volume 6, Wiley & Sons, New York 1986, Seiten 1-51, ausführlich geschildert.

Das Polymer B der Dispersion wird durch Monomere erzeugt, die wenigstens zu einem erheblichen Teil in Wasser schwerlöslich sind und auch bei Änderung des pH-Wertes schwerlöslich bleiben. Unter schwerlöslich wird eine Löslichkeit von weniger als 10 Gew.-%, insbesondere weniger als 5 Gew.-% bei 25 °C verstanden. Der Anteil der schwerlöslichen Monomeren muß wenigstens so groß sein, daß das entstehende Emulsionspolymerisat unter den Polymerisationsbedingungen in der Wasserphase unlöslich ist und in Form dispergierter Teilchen vorliegt. Im Sinne der Erfindung werden vorzugsweise solche Mischungen verwendet, die zu mindestens 70 Gew.-% und insbesondere zu mindestens 90 Gew.-% aus schwerlöslichen Monomeren bestehen.

Geeignete Monomere enthalten mindestens eine ethylenisch ungesättigte Gruppe. Die Begriffe ethylenisch ungesättigt, vinylisch ungesättigt und α,β-ungesättigt werden synonym verwendet. Dem Fachmann ist bekannt, daß derartige Monomere sich unter den Bedingungen der Emulsionspolymerisation in einem wäßrigen Medium zu Polymeren verbinden lassen. Dazu zählen beispielsweise Vinylverbindungen, Styrole und Acrylate sowie deren Derivate. Zu den geeigneten Vinylverbindungen zählen beispielsweise Vinylchlorid sowie Vinylester wie Vinylacetat, Vinylpropionat, Vinylester der Versaticsäure aber auch Vinylfettsäureester wie Vinyllaurat. Geeignete Styrolverbindungen sind Styrol, Vinyltoluol, α-Methylstyrol, Ethylstyrol, iso-Propylsryrol, tert.-Butylstyrol, 2,4-Dimethylstyrol, Diethylstyrol, o-Methyl-p-iso-propylstyrol, Halogenstyrole wie Chlorstyrol, Fluorstyrol und Jodstyrol, 2,4-Cyanostyrol, Hydroxystyrol, Nitrostyrol, Aminostyrol und/oder Phenylstyrol. Bevorzugt sind insbesondere Styrol, Vinyltoluol und α-Methylstyrol. Als geeignete Acrylate seien beispielhaft Acrylsäure-, Methacrylsäure- und Crotonsäure-Ester genannt, beispielsweise auch Ester die Hydroxyfunktionen enthalten, wie Hydroxyethylacrylat und Hydroxyethylmethacrylat. Bei der Emulsionspolymerisation können selbstverständlich auch Mischungen derartiger ethylenisch ungesättigter Monomere polymerisiert werden, soweit sie sich zur Copolymerisation eignen. Um Dispersionen mit Glasübergangstemperaturen von über 75 °C zu erhalten, wird bevorzugt von Styrol oder Styrolderivaten und/oder Methacrylaten ausgegangen.

Geeignete Initiatoren sind üblicherweise wasserlösliche radikalbildende Verbindungen, beispielsweise Wasserstoffperoxyd, Peressigsäure, Perbenzoesäure sowie Perdisulfate, beispielsweise Kalium- oder Ammoniumperoxodisulfat, Per-phosphate, Per-oxycarbonate und Hydroperoxide, wie tert.-Butylhydroperoxid. Geeignete Redoxkatalysatorsysteme sind beispielsweise Natriumpersulfat/Natriumformaldehydsulfoxylat, Cumolhydroperoxid/Natriummetabisulfit, Wasserstoffperoxid/Ascorbinsäure und Schwefeldioxid/Ammoniumpersulfat. Geeignet sind auch Azo-Verbindungen, wie 4,4-Azo-bis-(cyanopentansäure). Die Katalysatoren werden in üblichen katalytisch wirksamen Konzentrationen verwendet. Diese liegen im allgemeinen zwischen 0,01 bis 4,0 Gew.-%, bezogen auf die Dispersion.

In besonderen Ausführungsformen können weitere für die Emulsionspolymerisation übliche Komponenten verwendet werden. Dies sind beispielsweise Beschleuniger, Puffer und beliebige andere Bestandteile, die neben den erfindungsgemäßen Stabilisatoren in der Emulsionspolymerisationsreaktionsmischung verwendet werden können und aus dem Stand der Technik zu Emulsionspolymerisationsverfahren bekannt sind. Dies sind beispielsweise Fe²⁺-Salze, die in Kombination mit Natriumformaldehydsulfoxylaten eine Beschleunigung der Radikalbildung von Radikalstartern bewirken oder als Puffer wirkende Salze, beispielsweise Phosphate, Carbonate, Citrate, die zur Stabilisierung des pH-Wertes verwendet werden können. Derartige Additive können bis zu 3 Gew.-% in der Dispersion enthalten sein. Bei der Durchführung der Emulsionspolymerisation hat es sich neben der Einstellung der Konzentration der Flotte als besonders zweckmäßig erwiesen, eine Vorpolymerisation von 1- 15 Gew.-% der Initiator und Monomerenmenge durchzuführen, da so die Qualität der Dispersion, insbesondere bezüglich Transparenz und Viskosität, exakter kontrollierbar wird.

Ein weiterer Gegenstand der Erfindung ist die Verwendung der Kunstharze und Kunstharzmischungen mit Wasser nach Anspruch 1 zur Herstellung von Bindemittelträgern für Druckfarben und Drucklacke auf Wasserbasis zum Bedrucken von Papier, Pappe, Kartonagen und dergleichen, beispielsweise mit dem Farbwerk einer Bogen- oder Rollenoffsetmaschine, aus Feuchtwerken, separaten Lackieraggregaten von Bogen- oder Rollenoffset-Druckmaschinen, Bogenlackiermaschinen, Tief- und Flexodruckmaschinen. Bei der Verwendung der erfindungsgemäßen Harzlösungen und Dispersionen als Bindemittelträger für Drucklacke und Druckfarbe beträgt deren Feststoffgehalt im allgemeinen 40 bis 75 Gew.-%. Diese Lacke und Farben enthalten 1 bis 70 Gew.-% erfindungsgemäße Dispersionen und/oder 1 bis 40 Gew.-% erfindungsgemäße Festharze sowie 0 bis 60 Gew.-% Glykole oder Glykolether, 0 bis 30 Gew.-% Netzmittel, 0 bis 35 Gew.-% Neutralisationsmittel (Basen), 0 bis 30 Gew.-% natürliche und/oder synthetische Wachse, 0 bis 2,5 Gew.-% Entschäumer, 0 bis 80 Gew.-% Wasser und 0 bis 60 Gew.-% Pigmente. Das Pigment/Bindemittel-Verhältnis bei Anreibeoperationen beträgt zwischen 5 : 95 und 95 : 5, bevorzugt 30 : 70 bis 70 : 30. Für die Anwendung als Pigmentanreibekomponenten sind auch Festkörpergehalte von größer 30 Gew.-% zweckmäßig. Für den Aufbau dieser Stammfarben, Pigmente und Druckfarben sind auch Mischungen verschiedener Typen von Dispersionen oder Harzlösungen zweckmäßig. Zur Einarbeitung von Pigmenten (beispielsweise Titandioxid, Buntpigmente, synthetische Ruße), Füllstoffen (beispielsweise Talkum, Chinaclay, Wachse), Farbstoffen und Verlaufsmitteln in die Lösungen und/oder Dispersionen und/oder deren Mischungen und/oder deren Verdünnungen sind die allgemein üblichen Mahl-, Misch-, Knet- und Anreibegeräte optional in Gegenwart üblicher Dispergierhilfsmittel einsetzbar.

Die Herstellung geeigneter, erfindungsgemäß verwendbarer Stabilisatoren sowie die Herstellung stabiler Polymerdispersionen durch Emulsionspolymerisation sowie deren Verwendung in Druckfarben und Drucklacken wird durch nachfolgende Beispiele erläutert.

### Beispiele:

Teile und Prozentangaben in den Beispielen beziehen sich, soweit nicht anders angegeben, auf das Gewicht. Alle Reaktionen werden unter Schutzgas (N₂) durchgeführt.

### Stabilisatoren / Harzlösungen:

### Beispiel 1

Eine Mischung aus Dodecanol (33,3 g), Tetraethylenglykolmonomethylether (66,6 g), Styrol (13,9 g), α-Methylstyrol (15,8 g), Acrylsäure (20,4g), Di-tert.-Butylperoxid (2,2 g) und Butanol (2,6 g) wird unter Stickstoff (N₂) auf 200°C erhitzt. Bei 200°C und fortwährender Abdestillation von Wasser und Spaltprodukten aus dem Initiator wird eine Mischung aus Styrol (278,1 g), α-Methylstyrol (315,2 g) und Acrylsäure (406,6 g) und parallel dazu eine Mischung von Di-tert.-Butylperoxid (38,4 g) und Butanol (47,4 g) über 5 Stunden dosiert. Nach einer weiteren Stunde bei 200°C werden im Vakuum (bis ca. 100 mbar) flüchtige Bestandteile abgetrennt. Nach Abkühlen und Entleeren erhält man ein Festharz mit einer Säurezahl von 216 und einem Schmelzpunkt von 113°C oder nach Eintrag der Harzschmelze bei ca. 190°C in Wasser (5425,3 g)/Ammoniak 25% (344,2 g) und Lösen bei 90°C eine ca. 17%ige Harzlösung.

### Beispiel 2

In eine unter ständigem Rühren und unter Stickstoff hergestellte Mischung aus Dodecanol (129,3 g) und Tetraethylenglykolmonomethylether (258,5 g) wird bei konstanter Temperatur von 200 °C synchron über getrennte Zuläufe a) Styrol (684,9 g), α-Methylstyrol (777,5 g), Acrylsäure (1253,4 g) und b) Di-tert.-Butylperoxid (134,1 g) in Butanol (Butanol 129,3 g) innerhalb eines Zeitraums von ca. 6 h dosiert. Niedrigsiedende Bestandteile und Wasser werden dabei über Kopf abdestilliert. Man läßt dann noch eine halbe Stunde bei 195 °C rühren, trennt flüchtige Bestandteile im Vakuum ab und versetzt bei fortwährender Abkühlung auf ca. 150 °C mit Tetraethylenglykolmonomethylether (274,6 g) und Essigsäure (183,0 g). Unmittelbar anschließend wird die Schmelze nun langsam in gut durchmischtes Ammoniak-Wasser (entionisiertes Wasser: 5398,4 g und 25%ig Ammoniak: 1144,0 g) eingetragen und die Polymere bei ca. 90 °C vollständig zur Lösung gebracht. Man erhält so eine ca. 30%ige Harzlösung mit einem pH von ca. 8,7 und einer Viskosität nach Ubbelohde von ca. 200 mPa·s.

### Beispiel 3

Eine Mischung aus Dodecanol (20,0 g), Tetraethylenglykolmonomethylether (55,0 g), Styrol (19,5 g), α-Methylstyrol (22,1 g), Acrylsäure (33,5 g), Di-tert.-Butylperoxid (3,6 g) und Butanol (3,6 g) wird unter Stickstoff (N₂) auf 200°C erhitzt. Bei 200°C und fortwährender Abdestillation von Wasser und Spaltprodukten aus dem Initiator wird eine Mischung aus Styrol (252,9 g), α-Methylstyrol (286,9 g) und Acrylsäure (435,3 g) und parallel dazu eine Mischung von Di-tert.-Butylperoxid (46,4 g) und Butanol (46,4 g) über 5 Stunden dosiert. Nach einer weiteren Stunde bei 200°C werden im Vakuum flüchtige Bestandteile abgetrennt. Nach Abkühlen und Entleeren erhält man ein Festharz mit einer Säurezahl von ca. 245 und einem Schmelzpunkt von ca. 123°C oder nach Versetzen mit 1-Methoxy-2-propanol (134,5 g) unter gleichzeitigem Abkühlen auf ca. 170°C und Eintrag dieser Masse in Wasser (4591,2 g) / Ammoniak 25% (363,3 g) und Lösen bei 90°C eine ca. 18% ige Harzlösung.

Die erfindungsgemäßen Harze weisen im ¹³C-Kernresonanzspektrum im Bereich 18 bis 36ppm im Gegensatz zu Harzen gemäß EP-B 0 068 024 zumindest 3 Resonanzlinien auf, die auf Anwesenheit von Alkylketten im Polymer beruhen. Die erfindungsgemäßen Harze zeigen außerdem ein erhöhtes Emulgier- und Dispergiervermögen, beispielsweise für Polystyrol (s. Vergleichsbeispiel).

### Dispersionen:

### Beispiel 4

874,2 g der 17%igen Harzlösung aus Beispiel 1 wird falls erforderlich mit Ammoniak (25%ig) auf pH = 9,1 eingestellt und anschließend unter Stickstoff auf 90°C erhitzt. Nach Erreichen von 90°C wird Styrol (10,0 g) und parallel dazu Ammoniumperoxodisulfat (0,4 g) in Wasser (5,0 g) hinzugefügt und 20 Minuten bei 90°C gerührt. Nun wird innerhalb von ca. 3 Stunden eine Dosierung von Styrol (440,0 g) und parallel dazu eine Dosierung von Ammoniumperoxodisulfat (1,5 g) in Wasser (40,0 g) durchgeführt. Man läßt ca. 1 Stunde nachreagieren, gegebenfalls unter Zugabe eines Redoxsystems, kühlt ab und erhält so eine klare, stippenfreie Dispersion mit einem Festkörpergehalt von ca. 43,0% und einer Viskosität von ca. 70 mPa·s.

### Beispiel 5

In eine auf 24% Polymeranteil verdünnte Harzlösung aus Beispiel 2 (621,3 g), wird nach Einstellung des pH-Wertes auf 8,9 mit Ammoniak und Erhitzen auf 90 °C, synchron aber über getrennte Zuläufe a) Styrol (225,0 g) und b) Ammoniumperoxodisulfat (1,0 g) in entionisiertem Wasser (40,0 g) über einen Zeitraum von 3 Stunden dosiert. Man läßt ca. 1 Stunde nachreagieren, kühlt ab und erhält so eine Dispersion mit einem Festkörpergehalt von ca. 42,6 % und einer Viskosität von ca. 220 mPa·s.

### Beispiel 6

Die 18%ige Lösung aus Beispiel 3 (6768,5 g) wird falls erforderlich mit Ammoniak (25%ig) auf pH ca. 9,1 eingestellt und anschließend unter Stickstoff auf 90°C erhitzt. Nach Erreichen von 90°C wird Styrol (83,3 g) und parallel dazu Ammoniumperoxodisulfat (3,33 g) in Wasser (41,7 g) hinzugefügt und 20 Minuten bei 90°C gerührt. Nun wird innerhalb von ca. 3 Stunden eine Dosierung von Styrol (3666,7 g) und parallel dazu eine Dosierung von Ammoniumperoxodisulfat (16,7 g) in Wasser (333,0 g) durchführt. Man läßt ca. 1 Stunde nachreagieren, gegebenfalls unter Zugabe eines Redoxsystems, kühlt ab und erhält so eine klar ablaufende, stippenfreie Dispersion mit einem Festkörpergehalt von ca. 45% und einer Viskosität von ca. 250 mPa·s (nach Ubbelohde).

### Vergleichsbeispiel

Eine 17%ige Lösung eines Harzes gemäß EP-B 0 068 024 (SZ=222, 150,0 g) in Wasser (678,5 g) und Ammoniak 25% (44,4 g) wird falls erforderlich mit Ammoniak (25%-ig) auf pH = 9,1 eingestellt und anschließend unter Stickstoff auf 90°C erhitzt. Nach Erreichen von 90°C wird Styrol (10,0 g) und parallel dazu Ammoniumperoxodisulfat (0,4 g) in Wasser (5,0 g) hinzugefügt und 20 Minuten bei 90°C gerührt. Nun wird innerhalb von ca. 3 Stunden eine Dosierung von Styrol (440,0 g) und parallel dazu eine Dosierung von Ammoniumperoxodisulfat (1,5 g) in Wasser (40,0 g) durchgeführt. Man läßt ca. 1 Stunde nachreagieren, gegebenfalls unter Zugabe eines Redoxsystems, kühlt ab und erhält so eine trübe, schwer filtrierbare Dispersion mit einem Festkörpergehalt von ca. 42 Gew.-%, einer Viskosität von ca. 20 mPa·s und mit hohem Gehalt an Grobanteilen (Stippen).

### Beispielvorschrift zur Herstellung eines Glanzüberdrucklackes:

40 Teile einer 30%igen Harzlösung von Beispiel 1 werden mit 57 Teilen einer Dispersion aus Beispiel 6, 1 Teil Wasser und 2 Teilen Butyldiglykol versetzt und kräftig durchmischt. Dieser Wasserlack mit ca. 36% Festkörpergehalt hat eine DIN-Auslaufzeit von ca. 16s (4 mm / 23°C).

### Beispielvorschrift zur Herstellung einer pigmentierten Druckfarbe

82 Gew.-Teile einer 33%igen wäßrigen ammoniakalischen Lösung von Harz aus Beispiel 1 werden mit 17 Teilen ® Permanent Gelb GRX, 0,1 Teilen Entschäumer und 0,9 Teilen Wasser 30 Minuten bei Raumtemperatur mit Glaskugeln im Paintshaker geschüttelt. Nach Absieben über ein 100µm-Sieb wird eine Stammfarbe erhalten, die nach Verdünnen mit Dispersionen des Beispiels 5 auf 7% Pigmentgehalt eine für den Drucksektor geeignete Wasserfarbe gibt.

## Patentansprüche

1. Emulgator-freie Kunstharze und Kunstharzmischungen mit Wasser, enthaltend
a) ein gegebenenfalls neutralisiertes oder teilneutralisiertes Säuregruppen-haltiges Polymerharz A, herstellbar durch in-situ Polymerisation von Säuregruppenhaltigen ethylenisch ungesättigten Verbindungen mit weiteren ethylenisch ungesättigten Verbindungen und Kondensation mit Monohydroxyverbindungen und gegebenenfalls Neutralisation oder Teilneutralisation, und
b) gegebenenfalls ein wasserunlösliches Polymerharz B in Form von Latexteilchen, herstellbar durch Emulsionspolmerisation von ethylenisch ungesättigten Verbindungen in Gegenwart des Polymerharzes A.

2. Verfahren zur Herstellung von Emulgator-freien Kunstharzen und Kunstharzmischungen mit Wasser nach Anspruch 1, dadurch gekennzeichnet, daß
a) ein Säuregruppen-haltiges Polymerharz A hergestellt wird durch in-situ Polymerisation von Säuregruppen-haltigen ethylenisch ungesättigten Verbindungen mit weiteren ethylenisch ungesättigten Verbindungen und Kondensation mit Monohydroxyverbindungen und gegebenenfalls anschließend neutralisiert oder teilneutralisiert wird und
b) gegebenenfalls ein wasserunlösliches Polymerharz B in Form von Latexteichen hergestellt wird durch Emulsionspolymerisation von ethylenisch ungesättigten Verbindungen in Gegenwart des gegebenenfalls neutralisierten oder teilneutralisierten Polymerharzes A.

3. Verfahren zur Herstellung von Emulgator-freien Kunstharzen und Kunstharzmischungen nach Anspruch 2, dadurch gekennzeichnet, daß nach Abschluß der in-situ Polymerisation und Kondensation die so erhaltene Masse in mit Neutralisationsmittel versehenes Wasser eingetragen wird.

4. Verfahren zur Herstellung von Emulgator-freien Kunstharzen und Kunstharzmischungen nach Anspruch 2, dadurch gekennzeichnet, daß nach Abschluß der in-situ Polymerisation und Kondensation zunächst niedermolekulare organische Säuren und/oder Glykolether zur Schmelze des Polymerharzes A zugesetzt werden und die so erhaltene Masse in mit Neutralisationsmittel versehenes Wasser eingetragen wird.

5. Verwendung der Kunstharze und Kunstharzmischungen mit Wasser nach Anspruch 1 zur Herstellung von Bindemittelträgern für Druckfarben und Drucklacke auf Wasserbasis.
